# EUROPÄISCHE PATENTANMELDUNG

(11) **EP 3 269 237 A1**
(43) Veröffentlichungstag der Anmeldung: **17.01.2018**
(21) Anmeldenummer: 16178764.3
(22) Anmeldetag: 11.07.2016
(51) Int. Cl.: A01M 7/00, B05B 9/08

(54) **SPRÜHGERÄT MIT AUSWECHSELBARER KARTUSCHE**

(71) Anmelder: Bayer CropScience AG, 40789 Monheim am Rhein (DE)
(72) Erfinder: Gutsman, Volker, 40764 Langenfeld (DE)
(74) Vertreter: BIP Patents

(57) **Zusammenfassung**

Die vorliegende Erfindung betrifft die Applikation von flüssigen Wirkstoffen mit Hilfe eines tragbaren Sprühgeräts. Gegenstand der vorliegenden Erfindung ist ein System umfassend ein tragbares Sprühgerät und eine auswechselbare Kartusche, die ein Wirkstoffkonzentrat enthält. Gegenstand der vorliegenden Erfindung ist ferner ein Verfahren zur Applikation einer flüssigen Wirkstoffformulierung. Ein weiterer Gegenstand der vorliegenden Erfindung ist eine auswechselbare Kartusche, die über eine Speichereinheit verfügt, in der Informationen über einen einzustellenden Verdünnungsgrad für das in der Kartusche enthaltende Wirkstoffkonzentrat abgelegt sind. Ein weiterer Gegenstand der vorliegenden Erfindung ist ein Sprühgerät mit einer Kontrolleinheit, die eine Speichereinheit einer an das Sprühgerät angeschlossenen Kartusche auslesen und auf Basis der ausgelesenen Informationen einen Verdünnungsgrad für das in der Kartusche enthaltende Wirkstoffkonzentrat einstellen kann.

## Beschreibung

Die vorliegende Erfindung betrifft die Applikation von flüssigen Wirkstoffen mit Hilfe eines tragbaren Sprühgeräts. Gegenstand der vorliegenden Erfindung ist ein System umfassend ein tragbares Sprühgerät und eine auswechselbare Kartusche, die ein Wirkstoffkonzentrat enthält. Gegenstand der vorliegenden Erfindung ist ferner ein Verfahren zur Applikation einer flüssigen Wirkstoffformulierung. Ein weiterer Gegenstand der vorliegenden Erfindung ist eine auswechselbare Kartusche, die über eine Speichereinheit verfügt, in der Informationen über einen einzustellenden Verdünnungsgrad für das in der Kartusche enthaltende Wirkstoffkonzentrat abgelegt sind. Ein weiterer Gegenstand der vorliegenden Erfindung ist ein Sprühgerät mit einer Kontrolleinheit, die eine Speichereinheit einer an das Sprühgerät angeschlossenen Kartusche auslesen und auf Basis der ausgelesenen Informationen einen Verdünnungsgrad für das in der Kartusche enthaltende Wirkstoffkonzentrat einstellen kann.

Tragbare Sprühgeräte zum Applizieren von Wirkstoffen wie Pestiziden, Insektiziden, Herbiziden und Fungiziden sind bekannt.

Weit verbreitet sind dabei Sprühgeräte, die als Kompressionssprüher bezeichnet werden. Sie umfassen einen Tank zur Aufnahme der zu versprühenden Flüssigkeit. Eine meist von Hand zu betätigende Luftdruckpumpe, die einen Teil des Tanks bildet, enthält einen üblichen Kolbenstangenaufbau und einen Betätigungshandgriff dafür. Diese Luftdruckpumpe wird verwendet, um über der zu versprühenden Flüssigkeit einen Luftdruck zu erzeugen. Das Unterdrucksetzen des Tanks wird dadurch bewirk, dass die Bedienperson die Pumpe periodisch betätigt bis ein gewünschter Tankdruck erreicht ist. Die Sprühflüssigkeit tritt aufgrund des Luftdrucks, der auf sie ausgeübt wird, durch ein in die Flüssigkeit im Tank eintauchendes Rohr aus und strömte dann durch einen Schlauch, ein Sprühstrahlventil am äußeren Ende des Schlauches, ein Verlängerungsrohr und schließlich durch eine Sprühdüse hindurch zu dem ausgewählten Zielbereich.

Pestizide, Insektizide, Herbizide und Fungizide werden heute zunehmend in Form von Konzentraten auf den Markt gebracht. Konzentrate haben den Vorteil geringerer Transportkosten. Der Anwender muss den Wirkstoff vor Verwendung verdünnen. Die Verdünnungsvorschiften finden sich gewöhnlich auf der Verpackung oder einem Beipackzettel.

Eine vom Anwender vorgenommene Verdünnung ist jedoch aus folgenden Gründen nachteilig:
Der Anwender kann in unerwünschten Kontakt mit dem Wirkstoff kommen. Es ist denkbar, dass sich der Anwender bei der Berechnung der Mengen an Konzentrat und Verdünnungsmittel vertut. Eine hohe Viskosität des Konzentrats kann zu eine ungenauen volumetrischen Abmessung der erforderlichen Menge führen.

Eine ungenaue Dosierung von Wirkstoffen kann eine Reihe von ungewollten Folgen haben. Die Behandlung des besprühten Objekts kann wirkungslos sein oder es kann zu einer Überdosierung kommen. Es ist denkbar, dass behördliche Vorschiften über abgegebene Mengen nicht eingehalten werden. Es ist denkbar, dass Fehler in der Bestandsüberwachung auftreten, da die abgegebenen Mengen falsch berechnet wurden.

Ein weiterer Nachteil des oben beschriebenen Sprühgeräts besteht darin, dass der Tank bei Verwendung eines anderen Wirkstoffs zunächst gereinigt werden muss. Ggf. muss die Reinigungsflüssigkeit entsorgt werden.

Ausgehend vom beschriebenen Stand der Technik bestand die Aufgabe darin, eine Vorrichtung zur Applikation von Wirkstoffen bereitzustellen, die einfach in der Handhabung ist, bei der keine manuelle Verdünnung von Konzentraten erforderlich ist, die eine genau definierbare Menge an Wirkstoff abgibt, die bequem zu transportieren und vom Anwender zu tragen und zu transportieren ist, bei der keine aufwändige Reinigung erforderlich ist, und die vielseitig eingesetzt werden kann.

Erfindungsgemäß wird diese Aufgabe durch die Gegenstände der unabhängigen Ansprüche 1, 6, 9 und 12 erfüllt. Bevorzugte Ausführungsformen finden sich in den abhängigen Ansprüchen sowie in der vorliegenden Beschreibung.

Ein erster Gegenstand der vorliegenden Erfindung ist eine Kartusche enthaltend ein Konzentrat, wobei die Kartusche Mittel zum reversiblen Anschluss der Kartusche an ein Sprühgerät umfasst, dadurch gekennzeichnet, dass die Kartusche über eine Speichereinheit verfügt, die beim Anschluss der Kartusche an ein Sprühgerät von einer Kontrolleinheit des Sprühgeräts ausgelesen werden kann und wobei in der Speichereinheit Informationen über einen einzustellenden Verdünnungsgrad des Konzentrats gespeichert sind.

Ein weiterer Gegenstand der vorliegenden Erfindung ist ein Sprühgerät, umfassend
- einen Behälter zur Aufnahme eines Verdünnungsmittels,
- einen Auslass,
- Mittel zur Förderung des Verdünnungsmittels in Richtung Auslass,
- Mittel zum reversiblen Anschluss einer austauschbaren Kartusche enthaltend ein Konzentrat an das Sprühgerät,
- Mittel zur Förderung des Konzentrats in Richtung Auslass, und
- eine Kontrolleinheit
dadurch gekennzeichnet, dass die Kontrolleinheit über Mittel zum Auslesen einer zur Kartusche gehörigen Speichereinheit verfügt, um einen Verdünnungsgrad für das Konzentrat zu ermitteln, und wobei die Kontrolleinheit über eine Regeleinheit verfügt, um das Konzentrat entsprechend dem empfangenen Verdünnungsgrad zu verdünnen, bevor das Konzentrat das Sprühgerät über den Auslass verlässt.

Ein weiterer Gegenstand der vorliegenden Erfindung ist ein System, umfassend
- ein tragbares Sprühgerät, das folgende Komponenten umfasst:
   - einen Behälter zur Aufnahme eines Verdünnungsmittels,
   - einen Auslass,
   - Mittel zur Förderung des Verdünnungsmittels in Richtung Auslass,
   - Mittel zum reversiblen Anschluss einer austauschbaren Kartusche enthaltend ein Konzentrat an das Sprühgerät,
   - Mittel zur Förderung des Konzentrats in Richtung Auslass, und
   - eine Kontrolleinheit
- und eine auswechselbare Kartusche, die Mittel zum reversiblen Anschluss der Kartusche an das Sprühgerät umfasst,
dadurch gekennzeichnet, dass die Kartusche über eine Speichereinheit verfügt, die beim Anschluss der Kartusche an das Sprühgerät von der Kontrolleinheit des Sprühgeräts ausgelesen werden kann und in der Informationen über einen einzustellenden Verdünnungsgrad des Konzentrats mit dem Verdünnungsmittel gespeichert sind.

Ein weiterer Gegenstand der vorliegenden Erfindung ist ein Verfahren zur Applikation einer Wirkstoffformulierung, umfassend die folgenden Schritte:
- Bereitstellen einer auswechselbaren Kartusche mit einem Wirkstoffkonzentrat, wobei die Kartusche eine Speichereinheit umfasst, wobei in der Speichereinheit ein Verdünnungsrad gespeichert ist,
- Bereitstellen eines Sprühgeräts mit einem Verdünnungsmittel, wobei das Sprühgerät eine Kontrolleinheit umfasst, wobei die Kontrolleinheit über Mittel verfügt, den Verdünnungsgrad aus der Speichereinheit auszulesen,
- Anschließen der auswechselbaren Kartusche an das Sprühgerät durch einen Benutzer,
- Auslesen des Verdünnungsgrads aus der Speichereinheit durch die Kontrolleinheit,
- Regeln der Flüsse der ersten und/oder zweiten Flüssigkeit aus ihren Behältnissen in Richtung Auslass, so dass eine Mischung der ersten und zweiten Flüssigkeit aus dem Auslass austritt, in der das Wirkstoffkonzentrat gemäß dem Verdünnungsgrad verdünnt ist.

Gemäß der vorliegenden Erfindung liegen Wirkstoffkonzentrat und Verdünnungsmittel in separaten Behältnissen vor. Der Anwender muss die Verdünnung des Wirkstoffkonzentrats jedoch nicht selbst manuell vornehmen sondern die Mischung erfolgt automatisch während des Sprühvorgangs. Der Anwender muss sich nicht einmal darum kümmern, in welchem Verhältnis das Wirkstoffkonzentrat und das Verdünnungsmittel gemischt werden müssen. Das korrekte Mischungsverhältnis wird durch eine Kontrolleinheit eingestellt, die das einzustellende Mischungsverhältnis von der Konzentrat-Kartusche empfängt, und den Fluss von Verdünnungsmittel und/oder Konzentrat so regelt, dass die Mischung das Sprühgerät im korrekten Mischungsverhältnis über den Auslass verlässt.

Die einzelnen Elemente, die das erfindungsgemäße System, die Kartusche, das Sprühgerät und das Verfahren kennzeichnen, werden nachfolgende näher erläutert. Bei dieser Erläuterung wird nicht zwischen den einzelnen Erfindungsgegenständen (Kartusche, Sprühgerät, System und Verfahren) unterschieden. Stattdessen gelten die nachfolgenden Beschreibungen für alle Erfindungsgegenstände in analoger Weise, unabhängig davon, in welchem Kontext sie stehen.

Ein Gegenstand der vorliegenden Erfindung ist ein tragbares Sprühgerät. Unter tragbar wird verstanden, dass das Gerät von einem Menschen ohne maschinelle Hilfsmittel von einem Ort zu einem anderen Ort transportiert werden kann.

Das Sprühgerät umfasst einen Behälter zur Aufnahme des Verdünnungsmittels. Das Verdünnungsmittel wird verwendet, um es mit dem Konzentrat zu mischen und damit eine Verdünnung des Konzentrats zu erzielen.

Das Verdünnungsmittel ist, so wie das Konzentrat auch, eine Flüssigkeit. Der Begriff "Flüssigkeit" soll hier auch Lösungen, Emulsionen und Suspensionen erfassen.

In einer bevorzugten Ausführungsform handelt es sich bei dem Verdünnungsmittel um Wasser.

Beim Konzentrat handelt es sich vorzugsweise um ein Wirkstoffkonzentrat. Unter Wirkstoffkonzentrat wird eine Formulierung eines Wirkstoffs verstanden, die in konzentrierter Form vorliegt und vor ihrer Verwendung verdünnt werden muss/sollte. Ein Wirkstoff ist eine Substanz oder ein Substanzgemisch, das eine biologische Wirkung aufweist. Beispiele für Wirkstoffe sind Pestizide, Insektizide, Herbizide und Fungizide. In einer besonders bevorzugten Ausführungsform handelt es sich bei dem Konzentrat um ein Pestizid-Konzentrat.

Der Behälter zur Aufnahme des Verdünnungsmittels kann aus einem beliebigen Material bestehen, das mit dem Verdünnungsmittel kompatibel ist. Der Begriff "kompatibel" bedeutet, dass das Material durch das Verdünnungsmittel nicht chemisch angegriffen werden sollte und dass das Material für das Verdünnungsmittel undurchlässig sein sollte.
Der Behälter kann als Tank ausgeführt sein, der einem Überdruck standhält. Der Überdruck kann eingesetzt werden, um das Verdünnungsmittel aus dem Tank in Richtung Auslass zu befördern.
In einer bevorzugten Ausführungsform wird der Behälter drucklos betrieben. Dadurch, dass der Behälter keinem Überdruck standhalten muss, kann er aus dünnwandigerem und leichterem Material gefertigt werden.
In einer ganz besonders bevorzugten Ausführungsform ist der Behälter als flexibler Beutel ausgeführt. Ein solcher Beutel weist vorzugsweise Gurte auf, damit er wie ein Rucksack auf den Rücken geschnallt und getragen werden kann.

In einer Ausführungsform ist das Sprühgerät so ausgeführt, dass der Benutzer beim Transport einen Teil des Sprühgeräts, der den Behälter umfasst, in der einen Hand trägt, und einen anderen Teil des Sprühgeräts, der den Auslass umfasst, in der anderen.
Vorzugsweise ist das Gerät so ausgeführt, dass der Benutzer einen Teil des Sprühgeräts, der den Behälter umfasst, auf dem Rücken tragen und transportieren kann. Einen anderen Teil, der den Auslass umfasst, wird nach wie vor mit einer Hand getragen, aber die zweite Hand ist nun frei. Dazu ist das Gerät mit entsprechenden Gurten ausgestattet.

Das erfindungsgemäße Sprühgerät weist ferner Mittel auf, um das Verdünnungsmittel aus dem Behälter in Richtung Auslass zu befördern. Wie bereits beschrieben, kann das Verdünnungsmittel mittels Druck aus dem Behälter in Richtung Auslass befördert werden. Dieser Druck kann beispielsweise mit einer manuell oder elektrisch betriebenen Luftpumpe oder mit einer Druckpatrone erzeugt werden.

Vorzugsweise wird das Verdünnungsmittel mit einer elektrisch betriebenen Pumpe in Richtung Auslass befördert.

Das erfindungsgemäße Sprühgerät umfasst ferner Mittel zum reversiblen Anschluss einer austauschbaren Kartusche an das Sprühgerät. Die Kartusche dient der Aufnahme des Konzentrats. Kartusche und Sprühgerät weisen zueinander kompatible Mittel zum Anschließen der Kartusche an das Sprühgerät auf. Ist die Kartusche an das Sprühgerät angeschlossen, so kann das in der Kartusche enthaltene Konzentrat aus der Kartusche durch Teile des Sprühgeräts in Richtung Auslass des Sprühgeräts befördert werden.

Der Anschluss der Kartusche an das Sprühgerät kann beispielsweise über eine Schraub- oder eine Bajonettverbindung erfolgen.

Die Kartusche ist austauschbar, das heißt, sie kann an das Sprühgerät angeschlossen und wieder entfernt werden. Sie wird vorzugsweise dann wieder entfernt und ggf. durch eine andere oder neue Kartusche ersetzt, wenn sie entleert worden ist.

Die Kartusche ist so ausgeführt, dass sie für das Konzentrat undurchlässig ist und durch das Konzentrat nicht chemisch angegriffen wird.

Vorzugsweise ist die Kartusche zumindest teilweise aus Kunststoff ausgeführt. Kunststoffe sind dafür bekannt, dass sie vielen Stoffen gegenüber chemisch inert sind. Sie sind zudem leicht, lassen sich gut verarbeiten und in nahezu beliebige Formen bringen.

Die Kartusche kann als Einwegbehälter oder Mehrwegbehälter ausgeführt sein.

Die Kartusche weist eine Speichereinheit auf. In der Speichereinheit ist ein Verdünnungsgrad gespeichert oder es sind Informationen gespeichert, anhand derer ein Verdünnungsgrad ermittelt werden kann. Der Verdünnungsgrad gibt an, in welchem Verhältnis das Konzentrat und ein Verdünnungsmittel (meistens Wasser) miteinander vermischt werden sollen, um eine gewünschte Wirkung zu erzielen.

Das Sprühgerät weist eine Kontrolleinheit auf. Die Kontrolleinheit ist in der Lage, die Informationen zum Verdünnungsgrad aus der Speichereinheit der Kartusche auszulesen. Die Mittel zum Auslesen der Speichereinheit und die Speichereinheit selbst sind entsprechend aufeinander abgestimmt. Es gibt vielfältige Möglichkeiten diese Kommunikation zwischen Kontrolleinheit und Speichereinheit zu realisieren. Einige dieser Möglichkeiten sind nachfolgend beschrieben.

Es ist zum Beispiel denkbar, dass auf der Kartusche ein optischer Code (Barcode, 2D-Code oder Ähnliches) aufgebracht ist. Die Kontrolleinheit verfügt über entsprechende Mittel zum Lesen (Leseeinheit) eines solchen optischen Codes. Bei einer solchen Ausführungsform präsentiert der Anwender der Leseeinheit den optischen Code auf der Kartusche, die Leseeinheit erfasst den Code und leitet die Daten an einen Speicher (Arbeitsspeicher, Langzeitspeicher) der Kontrolleinheit weiter. Eine solche Lösung ist jedoch insofern nachteilig, als dass sie das Zutun eines Anwenders erfordert.

In einer bevorzugten Ausführungsform erfolgt das Auslesen der Speichereinheit durch die Kontrolleinheit ohne Zutun des Anwenders.

Eine Möglichkeit des Auslesens ohne Zutun des Anwenders besteht beispielsweise darin, die Kartusche mit einem RFID-Tag zu versehen. Ein RFID-Tag weist eine Speichereinheit auf. Die Kontrolleinheit verfügt dementsprechend über Mittel, die Speichereinheit in dem RFID-Tag auszulesen.

In diesem Fall erfolgt das Auslesen kontaktlos. Neben der genannten Kommunikationsform sind auch andere kontaktlose Kommunikationsarten zwischen Speichereinheit und Kontrolleinheit denkbar wie Bluetooth oder Nahfeld-Kommunikation. Auch Ultraschall ist als kontaktlose Kommunikationsform denkbar.

Die Kommunikation kann aber auch kontaktbehaftet erfolgen. Es ist beispielsweise denkbar, dass sowohl die Kartusche als auch das Sprühgerät über elektrische oder optische Kontakte verfügen, die beim Anschluss der Kartusche an das Sprühgerät einen elektrischen oder optischen Kontakt zwischen Kartusche und Sprühgerät herstellen, über den die Kontrolleinheit auf die Speichereinheit der Kartusche zugreifen kann.

Neben einem einzustellenden Verdünnungsgrad können weitere Informationen in der Speichereinheit der Kartusche gespeichert sein, wie beispielsweise Art des Wirkstoffs, Chargen-Nummer, Haltbarkeitsdatum und Ähnliches.

Es ist denkbar, dass der Verdünnungsgrad direkt in der Speichereinheit der Kartusche gespeichert ist. Denkbar ist aber auch, dass in der Speichereinheit eine Kennung für die Kartusche und/oder das in der Kartusche enthaltene Konzentrat gespeichert ist. Eine solche Kennung kann beispielsweise eine Identifikationsnummer sein. Die Kontrolleinheit ist in der Lage, die Kennung aus der Speichereinheit auszulesen. Es ist denkbar, dass die Kontrolleinheit über ein Register verfügt, in dem verschiedene Konzentrate zusammen mit einem einzustellenden Verdünnungsgrad und der Kennung hinterlegt sind, so dass die Kontrolleinheit durch das Auslesen der Kennung, den einzustellenden Verdünnungsgrad dem Register entnehmen kann.

Das erfindungsgemäße Sprühgerät verfügt über Mittel zur Förderung des Konzentrats aus der Kartusche in Richtung Auslass. Vorzugsweise handelt es sich hierbei um eine elektrisch betriebene Pumpe.

Die Kontrolleinheit ermittelt den erforderlichen oder gewünschten Verdünnungsgrad und regelt den Fluss des Verdünnungsmittels und/oder des Konzentrats entsprechend. Auch hierbei sind verschiedene Varianten denkbar; einige davon sind nachfolgend beschrieben.

Es ist zum Beispiel denkbar, dass das Verdünnungsmittel aus dem Behälter in Richtung Auslass gefördert wird und mittels eines Durchflussmessers der Fluss ermittelt wird. Der Durchflussmesser kann mit der Kontrolleinheit verbunden sein und anhand des Flusses des Verdünnungsmittels in Richtung Auslass den Fluss des Konzentrats so regeln, dass sich ein konstantes Mischungsverhältnis zwischen Konzentrat und Verdünnungsmittel einstellt. Während also Verdünnungsmittel fließt, wird der Fluss gemessen und genau so viel Konzentrat dem Verdünnungsmittel zugeführt, dass sich eine Mischung mit dem gewünschten/erforderlichen Mischungsverhältnis (Verdünnungsgrad) ergibt.

Denkbar ist natürlich auch die umgekehrte Variante: das Konzentrat wird in Richtung Auslass gefördert, der Fluss wird gemessen und es wird genau so viel Verdünnungsmittel dem Konzentrat zugeführt, dass sich der gewünschte/erforderliche Verdünnungsrad einstellt. Da aber in der Regel der Fluss des Verdünnungsmittels größer ist als der Fluss des Konzentrats, ist diese zweite Variante in der Regel weniger bevorzugt als die erste Variante.

Denkbar ist auch, dass die Flüsse von Verdünnungsmittel und Konzentrat durch Regelungen aufeinander abgestimmt werden, um den gewünschten/erforderlichen Verdünnungsgrad zu erzielen. In einem solchen Fall werden beide Flüsse mittels entsprechender Sensoren erfasst.

In einer bevorzugten Ausführungsform wird das Verdünnungsmittel mit einer ersten elektrischen Pumpe aus dem Behälter in Richtung Auslass gefördert. Der Fluss des Verdünnungsmittels wird mit einem Durchflussmesser erfasst und an die Kontrolleinheit übermittelt. Die Kontrolleinheit ist mit einer zweiten elektrischen Pumpe verbunden und regelt den Fluss des Konzentrats in Richtung Auslass so, dass Konzentrat und Verdünnungsmittel als Mischung mit dem gewünschten/erforderlichen Mischungsverhältnis das Sprühgerät über den Auslass verlassen.

Mit einem Durchflussmesser wird die pro Zeiteinheit in Richtung Sprühdüse fließende Flüssigkeitsmenge erfasst. Unter Flüssigkeitsmenge wird je nach verwendetem Messverfahren das Volumen oder die Masse verstanden.

Der Durchflussmesser ist vorzugsweise einer, der üblicherweise in geschlossenen Rohrleitungen eingesetzt wird, wie beispielsweise ein magnetisch-induktiver Durchflussmesser, ein Schwebekörper-Durchflussmesser, ein Ultraschall-Durchflussmesser, ein Coriolis-Massendurchflussmesser, ein kalorimetrischer Durchflussmesser oder ein Vortex-Durchflussmesser. Denkbar ist aber auch die Verwendung einer Messblende oder eine Staudrucksonde.

In einer bevorzugten Ausführungsform wird die Durchflussmessung mit Hilfe eines Differenzdrucksensors vorgenommen.

Details zur Durchflussmessung können beispielsweise dem folgenden Lehrbuch entnommen werden: K.W. Bonfig: Technische Durchflussmessung, Vulkan-Verlag Essen, 3. Auflage, 2002, ISBN 3-8027-2190-X.

Über den Auslass verlassen Wirkstoffkonzentrat und Verdünnungsmittel als Mischung das Sprühgerät.

Es ist denkbar, dass Verdünnungsmittel und Konzentrat unmittelbar vor dem Auslass in einer entsprechenden Zuleitung zusammengeführt werden. Ebenso ist es aber auch denkbar, dass vor dem Auslass eine Mischkammer existiert, in welche Verdünnungsmittel und Konzentrat über zwei separate Zuleitungen eingebracht werden. In der Mischkammer kommt es dann zu einer Durchmischung von Verdünnungsmittel und Konzentrat bevor die Mischung dann über den Auslass das Sprühgerät verlässt.

Die Durchmischung von Verdünnungsmittel und Konzentrat kann durch geeignete Maßnahmen gefördert werden, beispielsweise durch statische Mischelemente.

Vorzugsweise ist am Auslass eine Sprühdüse angebracht.

Über die Sprühdüse kann eine gewünschte räumliche Verteilung der applizierten Mischung erreicht werden. Üblicherweise verwandelt die Sprühdüse die Flüssigkeit, die durch sie hindurchtritt, in Tropfen mit einer spezifischen Tropfengrößenverteilung, die unter anderem vom Druck der Flüssigkeit, von der Fließgeschwindigkeit der Flüssigkeit und der Geometrie der Sprühdüse abhängt.

Vorzugsweise ist die Sprühdüse austauschbar, so dass ein Anwender eine an die Applikation und das Zielobjekt angepasste Sprühdüse mit einer gewünschten Tropfengrößenverteilung und räumlichen Verteilung des Sprühguts auswählen kann.
Die Sprühdüse kann beispielsweise lanzenförmig oder pistolenförmig sein oder ein andere Form aufweisen. Vorzugsweise ist sie so ausgeführt, dass sie vom Benutzer mit einer Hand gehalten und auf das Zielobjekt gerichtet werden kann.
In einer bevorzugten Ausführungsform weisen die auswechselbare Sprühdüse und die Kontrolleinheit Mittel auf, die es der Kontrolleinheit ermöglichen, die Anwesenheit einer Sprühdüse und/oder die Art der anwesenden Sprühdüse zu erkennen. Es ist zum Beispiel denkbar, dass die Kontrolleinheit nur dann die Förderung der Flüssigkeiten aus ihren Behältern in Richtung Sprühdüse einleitet, wenn auch eine Sprühdüse angeschlossen ist. Ist keine Sprühdüse angeschlossen, erfolgt aus z.B. Sicherheitsgründen keine Förderung. Weiterhin ist denkbar, dass die Kontrolleinheit die Parameter zur Förderung der Flüssigkeiten an die Art der vorhandenen Sprühdüse anpasst, um ein optimales Sprühergebnis zu ermöglichen. Es ist denkbar, dass eine Sprühdüse einen Mindestdruck der ankommenden Flüssigkeit benötigt, um eine gewünschte räumliche Verteilung der Sprühflüssigkeit zu erzeugen. Dieser Mindestdruck könnte an der Sprühdüse in einer Weise codiert sein, die von der Kontrolleinheit gelesen werden kann, so dass der Benutzer derartige Parameter nicht manuell einstellen muss.

Vor der Sprühdüse baut sich üblicherweise ein Druck auf. Es ist denkbar, dass dieser Druck in einem definierten Bereich liegen muss, um ein optimales Sprühergebnis zu erzielen.

In einer bevorzugten Ausführungsform ist daher vor der Sprühdüse ein Drucksensor angebracht, der mit der Kontrolleinheit verbunden ist. Mittels des Drucksensors regelt die Kontrolleinheit den Fluss von Verdünnungsmittel und/oder Konzentrat so, dass sich der Druck stets in einem definierten Bereich bewegt.

Vorzugsweise ist vor dem Auslass ein Ventil angebracht. Dieses Ventil kann manuell oder automatisch geöffnet und geschlossen werden.

Vorzugsweise kann dieses Ventil manuell betätigt werden, so dass der Benutzer die am Auslass angebrachte Sprühdüse auf ein Zielobjekt richten und durch manuelles Öffnen des Ventils den Sprühvorgang starten kann.
Denkbar ist auch, dass das Ventil automatisch geöffnet wird. Denkbar ist zum Beispiel, dass das Sprühgerät über einen Sensor verfügt, der die Lage der Sprühdüse im Raum erkennt und bei einer bestimmten Lage das Ventil automatisch öffnet oder schließt. Denkbar ist zum Beispiel, dass das Ventil geschlossen ist, wenn die Sprühdüse zum Boden gerichtet ist und geöffnet wird, wenn die Sprühdüse in die Waagerechte gehoben wird.
Denkbar ist auch, dass das Ventil automatisch geöffnet wird, wenn sich die Sprühdüse dem Zielobjekt nähert. Dies kann beispielsweise mittels Sensoren oder GPS-gestützt erfolgen.

In einer weiteren bevorzugten Ausführungsform wird die Menge an appliziertem Konzentrat ermittelt und gespeichert. Die Speicherung kann in der Kontrolleinheit des Sprühgeräts und/oder in der Speichereinheit der Kartusche erfolgen. Vorzugsweise wird die Restmenge an Konzentrat, das in der Kartusche verbleibt, ermittelt und gespeichert. Die Speicherung kann wiederum in der Kontrolleinheit des Sprühgeräts und/oder in der Speichereinheit der Kartusche erfolgen.
In einer bevorzugten Ausführungsform gehört ein externes Computersystem zu dem erfindungsgemäßen System. Unter "extern" wird verstanden, dass das Computersystem kein integraler Bestandteil des Sprühgeräts und auch nicht Teil der Kartusche ist. Das Computersystem kann aber eine kommunikative Verbindung zur Kontrolleinheit des Sprühgeräts und/oder der Speichereinheit der Kartusche aufnehmen, um einen Datentransfer vorzunehmen. Daten können vom Computersystem zur Speichereinheit übertragen werden, beispielsweise um Produktdaten, den einzustellenden Verdünnungsgrad für das Konzentrat oder dergleichen zu übertragen. Es ist auch denkbar, dass Daten von der Speichereinheit auf das Computersystem übertragen werden können, beispielsweise über die in der Kartusche enthaltende Restmenge an Konzentrat zu übermitteln. Es ist ferner denkbar, dass Daten von der Kontrolleinheit auf das Computersystem übertragen werden, wie beispielsweise Daten über die Menge an appliziertem Konzentrat oder die Sprühdauer oder den Sprühort oder den Nutzer. Genauso ist es denkbar, dass Daten von dem Computersystem auf die Kontrolleinheit übermittelt werden, beispielsweise Daten für einen Sprühauftrag.

Die Erfindung wird nachfolgend anhand von Ausführungsbeispielen näher erläutert, ohne die Erfindung jedoch auf diese Beispiele beschränken zu wollen.

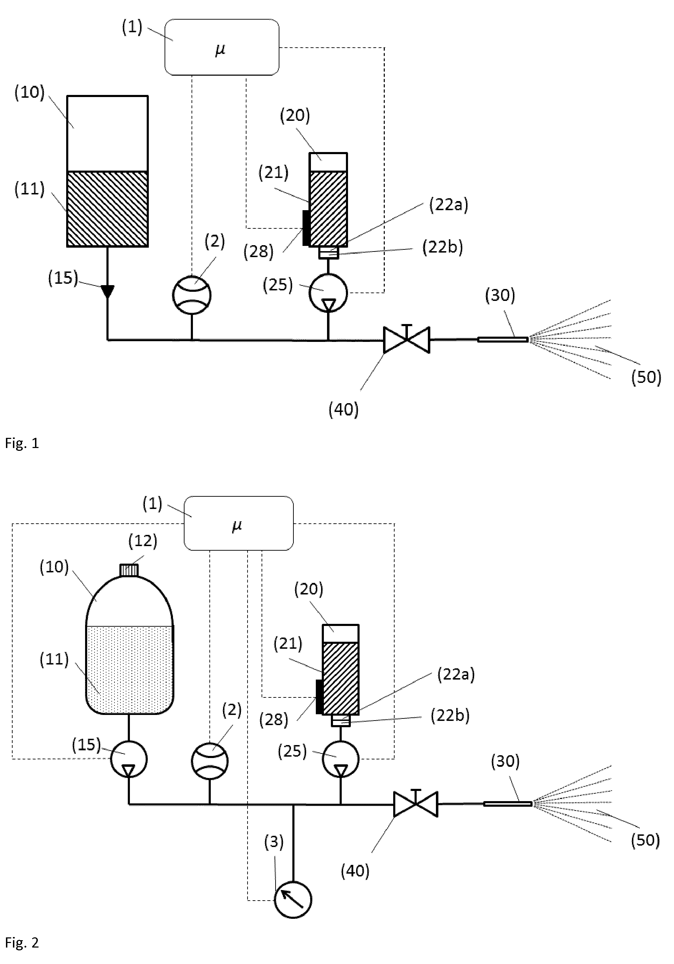

Figur 1 zeigt eine Ausführungsform des erfindungsgemäßen Systems. Das System umfasst ein erfindungsgemäßes Sprühgerät und eine erfindungsgemäße Kartusche.
Das erfindungsgemäße Sprühgerät umfasst einen Behälter (10) mit einem Verdünnungsmittel (11), einen Auslass (30), Mittel (15) zum Fördern des Verdünnungsmittels (11) aus dem Behälter (10) in Richtung Auslass (30), ein Ventil (40), Mittel (22b) zum Anschließen einer auswechselbaren Kartusche (20), eine elektrisch betriebene Pumpe zum Fördern eines in der Kartusche (20) befindlichen Konzentrats (21) aus der Kartusche (20) in Richtung Auslass (30), einen Durchflussmesser (2) zur Messung des Flusses des Verdünnungsmittels (11) aus dem Behälter (10) in Richtung Auslass (30) und eine Kontrolleinheit (1).
Die Mittel (15) zum Fördern des Verdünnungsmittels (11) aus dem Behälter (10) in Richtung Auslass (30) sind in Figur 1 schematisch als Pfeil dargestellt, der lediglich die Flussrichtung angibt. Der Pfeil bedeutet nicht, dass sich die entsprechenden Mittel an dieser Stelle der Zuleitung befinden müssen.
Der Auslass (30) ist als Sprühdüse ausgeführt. Über die Sprühdüse verlassen das Verdünnungsmittel und das Konzentrat das Sprühgerät in Form einer Mischung (50) mit einem konstanten Mischungsverhältnis.
Die erfindungsgemäße Kartusche (20) beinhaltet das Konzentrat (21). Die Kartusche verfügt über Mittel (22a) zum reversiblen Anschließen der Kartusche (20) an das Sprühgerät. Die erfindungsgemäße Kartusche (20) verfügt ferner über eine Speichereinheit (28). In dieser Speichereinheit (28) ist ein Mischungsverhältnis gespeichert.
Die Kontrolleinheit (1) hat Zugriff auf die Speichereinheit (28) (der Zugriff ist dargestellt durch die gestrichelte Linie) und kann das dort gespeicherte Mischungsverhältnis auslesen.
Die Kontrolleinheit (1) steht zudem in Verbindung mit dem Durchflussmesser (2) und der Pumpe (25). Wird das Ventil (40) (manuell oder automatisch) geöffnet, wird das Verdünnungsmittel (11) aus dem Behälter (10) in Richtung Auslass (30) gefördert. Mittels Durchflussmesser (2) wird der Fluss des Verdünnungsmittels (11) erfasst. Die Kontrolleinheit (1) regelt auf Basis des vom Durchflussmesser (2) gemessenen Flusses die Menge an Konzentrat (21), die mittels Pumpe (25) dem Verdünnungsmittel (11) zugeführt wird, so dass sich das aus der Speichereinheit ausgelesene Mischungsverhältnis einstellt.

Fig. 2 zeigt eine bevorzugte Ausführungsform des erfindungsgemäßen Sprühsystems.

Das erfindungsgemäße Sprühgerät umfasst einen Behälter (10) mit einem Verdünnungsmittel (11), einen Auslass (30), eine erste Pumpe (15) zum Fördern des Verdünnungsmittels (11) aus dem Behälter (10) in Richtung Auslass (30), ein Ventil (40), Mittel (22b) zum Anschließen einer auswechselbaren Kartusche (20), eine zweite Pumpe zum Fördern eines in der Kartusche (20) befindlichen Konzentrats (21) aus der Kartusche (20) in Richtung Auslass (30), einen Durchflussmesser (2) zur Messung des Flusses des Verdünnungsmittels (11) aus dem Behälter (10) in Richtung Auslass (30), einen Drucksensor (3) zur Messung des Drucks in einer Zuleitung zum Auslass und eine Kontrolleinheit (1).

Der Auslass (30) ist als Sprühdüse ausgeführt. Über die Sprühdüse verlassen das Verdünnungsmittel und das Konzentrat das Sprühgerät in Form einer Mischung (50) mit einem konstanten Mischungsverhältnis.

Der Behälter (10) ist als flexibler Beutel ausgeführt. Er umfasst eine Öffnung mit einem wiederverschließbaren Verschluss (12), ober die das Verdünnungsmittel (11) in den Beutel gefüllt werden kann.

Die erfindungsgemäße Kartusche (20) beinhaltet das Konzentrat (21). Die Kartusche verfügt über Mittel (22a) zum reversiblen Anschließen der Kartusche (20) an das Sprühgerät. Die erfindungsgemäße Kartusche (20) verfügt ferner über eine Speichereinheit (28). In dieser Speichereinheit (28) ist ein Mischungsverhältnis gespeichert.

Die Kontrolleinheit (1) hat Zugriff auf die Speichereinheit (28) (der Zugriff ist dargestellt durch die gestrichelte Linie) und kann das dort gespeicherte Mischungsverhältnis auslesen.

Die Kontrolleinheit (1) steht zudem in Verbindung mit dem Durchflussmesser (2) und der Pumpe (25). Wird das Ventil (40) (manuell oder automatisch) geöffnet, wird das Verdünnungsmittel (11) aus dem Behälter (10) in Richtung Auslass (30) gefördert. Mittels Durchflussmesser (2) wird der Fluss des Verdünnungsmittels (11) erfasst. Die Kontrolleinheit (1) regelt auf Basis des vom Durchflussmesser (2) gemessenen Flusses die Menge an Konzentrat (21), die mittels Pumpe (25) dem Verdünnungsmittel (11) zugeführt wird, so dass sich das aus der Speichereinheit ausgelesene Mischungsverhältnis einstellt.

## Patentansprüche

1. Kartusche enthaltend ein Konzentrat, wobei die Kartusche Mittel zum reversiblen Anschluss der Kartusche an ein Sprühgerät umfasst, **dadurch gekennzeichnet, dass** die Kartusche über eine Speichereinheit verfügt, die beim Anschluss der Kartusche an ein Sprühgerät von einer Kontrolleinheit des Sprühgeräts ausgelesen werden kann und wobei in der Speichereinheit Informationen über einen einzustellenden Verdünnungsgrad des Konzentrats gespeichert sind.

2. Kartusche nach Anspruch 1, **dadurch gekennzeichnet, dass** das Konzentrat ein WirkstoffKonzentrat ist.

3. Kartusche nach einem der Ansprüche 1 oder 2, **dadurch gekennzeichnet, dass** die Speichereinheit Teil eines RFID-Tags ist.

4. Kartusche nach einem der Ansprüche 1 bis 3, **dadurch gekennzeichnet, dass** in der Speichereinheit Angaben zur Menge des in der Kartusche enthaltenden Konzentrats enthalten sind.

5. Kartusche nach Anspruch 4, **dadurch gekennzeichnet, dass** die Angaben bei oder nach einem Sprühvorgang aktualisiert werden.

6. Sprühgerät, umfassend
- einen Behälter zur Aufnahme eines Verdünnungsmittels,
- einen Auslass,
- Mittel zur Förderung des Verdünnungsmittels in Richtung Auslass,
- Mittel zum reversiblen Anschluss einer austauschbaren Kartusche enthaltend ein Konzentrat an das Sprühgerät,
- Mittel zur Förderung des Konzentrats in Richtung Auslass, und
- eine Kontrolleinheit
**dadurch gekennzeichnet, dass** die Kontrolleinheit über Mittel zum Auslesen einer zur Kartusche gehörigen Speichereinheit verfügt, um einen Verdünnungsgrad für das Konzentrat zu ermitteln, und wobei die Kontrolleinheit über eine Regeleinheit verfügt, um das Konzentrat entsprechend dem empfangenen Verdünnungsgrad mit dem Verdünnungsmittel zu verdünnen, bevor das Konzentrat das Sprühgerät über den Auslass verlässt.

7. Sprühgerät nach Anspruch 6, **dadurch gekennzeichnet, dass** der Behälter als flexibler Beutel ausgeführt ist, und dass das Verdünnungsmittel Wasser ist und dass die Mittel zur Förderung des Wassers in Richtung Auslass eine erste elektrisch betriebene Pumpe umfassen, und dass die Mittel zur Förderung des Konzentrats in Richtung Auslass eine zweite elektrisch betriebene Pumpe umfassen.

8. Sprühgerät nach einem der Ansprüche 6 und 7, **dadurch gekennzeichnet, dass** der Auslass eine auswechselbare Sprühdüse umfasst, die vorzugsweise in einer kommunikative Verbindung mit der Kontrolleinheit steht.

9. System, umfassend
- ein tragbares Sprühgerät, das folgende Komponenten umfasst:
- einen Behälter zur Aufnahme eines Verdünnungsmittels,
- einen Auslass,
- Mittel zur Förderung des Verdünnungsmittels in Richtung Auslass,
- Mittel zum reversiblen Anschluss einer austauschbaren Kartusche enthaltend ein Konzentrat an das Sprühgerät,
- Mittel zur Förderung des Konzentrats in Richtung Auslass, und
- eine Kontrolleinheit
- und eine auswechselbare Kartusche, die Mittel zum reversiblen Anschluss der Kartusche an das Sprühgerät umfasst,
**dadurch gekennzeichnet, dass** die Kartusche über eine Speichereinheit verfügt, die beim Anschluss der Kartusche an das Sprühgerät von der Kontrolleinheit des Sprühgeräts ausgelesen werden kann und in der Informationen über einen einzustellenden Verdünnungsgrad des Konzentrats mit dem Verdünnungsmittel gespeichert sind.

10. System nach Anspruch 9, das eine Kartusche nach einem der Ansprüche 1 bis 5 und/oder ein Sprühgerät nach einem der Ansprüche 6 bis 8 umfasst.

11. System nach einem der Ansprüche 9 oder 10, umfassend ein externes Computersystem, das mit der Kontrolleinheit des Sprühgeräts und/oder mit der Speichereinheit der Kartusche in einer kommunikativen Verbindung stehen kann, wobei Daten von dem Computersystem an die Kontrolleinheit und/oder die Speichereinheit übertragen werden können und/oder Daten von der Kontrolleinheit und/oder der Speichereinheit an das externe Computersystem übertragen werden können.

12. Verfahren zur Applikation einer Wirkstoffformulierung, umfassend die folgenden Schritte:
- Bereitstellen einer auswechselbaren Kartusche mit einem Wirkstoffkonzentrat, wobei die Kartusche eine Speichereinheit umfasst, wobei in der Speichereinheit ein Verdünnungsrad gespeichert ist,
- Bereitstellen eines Sprühgeräts mit einem Verdünnungsmittel, wobei das Sprühgerät eine Kontrolleinheit umfasst, wobei die Kontrolleinheit über Mittel verfügt, den Verdünnungsgrad aus der Speichereinheit auszulesen,
- Anschließen der auswechselbaren Kartusche an das Sprühgerät durch einen Benutzer,
- Auslesen des Verdünnungsgrads aus der Speichereinheit durch die Kontrolleinheit,
- Regeln der Flüsse der ersten und/oder zweiten Flüssigkeit aus ihren Behältnissen in Richtung Auslass, so dass eine Mischung der ersten und zweiten Flüssigkeit aus dem Auslass austritt, in der das Wirkstoffkonzentrat gemäß dem Verdünnungsgrad verdünnt ist.

13. Verfahren nach Anspruch 12 unter Verwendung eines Sprühgeräts nach einem der Ansprüche 6 bis 8 und/oder unter Verwendung einer Kartusche nach einem der Ansprüche 1 bis 5.

14. Verfahren nach Anspruch 12 unter Verwendung eines Sprühsystems nach einem der Ansprüche 9 bis 11.
